(19) Europäisches Patentamt
European Patent Office
Office européen des brevets

(11) EP 1 145 071 B1

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(21) Anmeldenummer: **99948641.8**

(22) Anmeldetag: **26.10.1999**

(51) Int Cl.⁷: **G02B 27/14**, H04N 9/097, H04N 9/31

(86) Internationale Anmeldenummer:
**PCT/CH99/00504**

(87) Internationale Veröffentlichungsnummer:
**WO 00/037990 (29.06.2000 Gazette 2000/26)**

(54) **ANORDNUNG ZUR FARBAUFTEILUNG UND/ODER REKOMBINATION**
ARRANGEMENT FOR CHROMATIC SEPARATION AND/OR RECOMBINATION
DISPOSITIF POUR LA SEPARATION CHROMATIQUE ET/OU LA RECOMBINAISON

(84) Benannte Vertragsstaaten:
**CH DE FR GB LI**

(30) Priorität: **18.12.1998 CH 251098**

(43) Veröffentlichungstag der Anmeldung:
**17.10.2001 Patentblatt 2001/42**

(73) Patentinhaber: **Unaxis Balzers Aktiengesellschaft**
**9496 Balzers (LI)**

(72) Erfinder: **HEINE, Claus**
**CH-7000 Chur (CH)**

(74) Vertreter: **Troesch Scheidegger Werner AG**
**Schwäntenmos 14**
**8126 Zumikon (CH)**

(56) Entgegenhaltungen:

| | |
|---|---|
| **EP-A- 0 364 043** | **WO-A-98/05996** |
| **US-A- 3 202 039** | **US-A- 5 600 487** |
| **US-A- 5 777 674** | **US-A- 5 777 789** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Anordnung zur spektralen Farbaufteilung und/oder Rekombination von Licht nach dem Oberbegriff von Anspruch 1.

Aus der US-3 202 039 ist eine Anordnung zur Farbaufteilung bekannt. Sie umfasst ein erstes Prisma mit zwei ersten Flächen, welche zwischen sich einen ersten Prismenwinkel definieren. An einem zweiten Prisma definieren zweite Flächen zwischen sich den zweiten Prismenwinkel. Je eine der ersten und zweiten Flächen liegen sich parallel gegenüber. Diesbezüglich sind die Prismenwinkel in Wechselwinkelanordnung positioniert. Die sich gegenüberliegenden Flächen der Prismen sind durch einen Luftspalt beabstandet. Die daran realisierten Totalreflexionen führen mitunter zur angestrebten Licht-Teilung.

Bezüglich spektraler Farbaufteilung und/oder Rekombination nach einem ähnlichen Prinzip arbeitend, kann auf die US-A-5 777 789 oder 5 644 432 bzw. auf P. Baumeister, "Reflectors with Phase Compensation for a Reflective LC Colour Projection System", SID 98 DIGEST, Seiten 679, verwiesen werden.

Realisation des erwähnten Luftspaltes verteuert die Herstellung solcher Systeme ganz erheblich. Hinzu kommt, dass durch die Totalreflexionen eine nur sehr schwer zu kontrollierende Phasendrehung zwischen S- und P-Polarisation induziert wird. Ohne zusätzliche Massnahme wirkt sich diese oft stark auf den Kontrast der Lichtaufteilung aus. Ein weiterer Nachteil ist, dass Licht aufgrund nichtidealer Grenzflächen zum Luftspalt fehlgeleitet wird, was oft zu einer Abnahme der Bildqualität führt.

Aus der US-5 748 365 ist ein sogenanntes K-Prisma bekannt, bei dem, gemäss figürlicher Darstellung luftspaltfrei, Prismen aneinanderliegen. Dadurch werden lichtteilende Flächen gebildet, so dass eintreffendes Weisslicht an den Prismen durch Mehrfachreflexion in einen blauen und grünen Kanal geteilt wird, das rote Licht durch die Anordnung transmittiert wird.

Es ist Aufgabe der vorliegenden Erfindung, eine Anordnung eingangs genannter Art vorzuschlagen, die einerseits die vorteilhafte Wirkung einer Anordnung, wie sie aus der US-3 202 039 beispielsweise vorbekannt ist, beibehält, anderseits aber deren Nachteile, sowohl was Bildqualität wie auch was Herstellungaufwand anbelangt, behebt. Dies wird bei Ausbildung der erfindungsgemässen Anordnung nach dem Wortlaut des Kennzeichens von Anspruch 1 erreicht.

In der vorliegenden Schrift werden folgende Definitionen verwendet:

<u>Definitionen</u>

- Licht,
  sichtbares Licht: Licht mit maximaler Energie im Spektralbereich 380 nm - 780 nm
- rotes Licht: Licht mit maximaler Energie im Spektralbereich 580 nm - 780 nm, insbesondere im Spektralbereich 600 nm - 680 nm
- grünes Licht: Licht mit einer maximalen Energie im Spektralbereich 490 nm - 605 nm, insbesondere im Spektralbereich 500 nm - 600 nm
- blaues Licht: Licht mit maximaler Energie im Spektralbereich 380 nm - 510 nm, insbesondere im Spektralbereich 420 nm - 500 nm
- gelbes Licht: Licht mit maximaler Energie im Spektralbereich 560 nm - 605 nm, insbesondere bei 578 nm ± 3 nm
- weisses Licht: Licht mit rotem, blauem und grünem LichtAnteil.

transparent: vernachlässigbare Absorption im Spektralbereich 380 nm - 720 nm

AdR: "Angle dependent Reflexion", spektrales Reflexionsverhalten in Abhängigkeit vom Einfallswinkel des reflektierten Lichtes

AOI: Angle of incidence, Einfallswinkel.

Erfindungsgemäss erfolgt mithin die Farbaufteilung - mit entsprechender Reflexion - an der erfindungsgemässen Anordnung durch Vorsehen eines Dünnfilm-Schichtsystems zwischen den Prismen, welches bezüglich seiner AdR auf die Prismenwinkel abgestimmt ist. Dadurch wird es einerseits möglich, die Nachteile der aus der US-3 202 039 vorbekannten Anordnung bezüglich Luftspalt zu beheben, indem sich die sich gegenüberliegenden Flächen der Prismen erfindungsgemäss luftspaltfrei gegenüberliegen können, womit alle mit dem erwähnten Luftspalt einhergehenden Nachteile, was Fertigungsproblematik und Bildqualität anbelangt, behoben werden können.

Vergleicht man die erfindungsgemäss vorgeschlagene Lichtteileranordnung mit dem Aufteilungs- bzw. Rekombinationsprinzip an sogenannten X-Cubes, wie beispielsweise aus der WO98/20383 derselben Anmelderin bekannt, so ergeben sich an der erfindungsgemässen Anordnung relativ kleine Einfallswinkel des Lichtes auf das für die Farbteilung wesentliche, erfindungsgemäss vorgesehene Dünnfilm-Schichtsystem. Daraus ergibt sich weiter, dass, verglichen mit der Strahlaufteilung bzw. -rekombination an Dünnfilm-Schichtsystemen eines X-Cubes, an der erfindungsgemässen Anordnung eine sehr viel geringere Polarisationsverschiebung des Lichtes an dessen Dünnfilm-Schichtsystem zu berücksichtigen ist. Ausserdem wird die Winkelabhängigkeit der Lichtübertragung und -aufteilung damit weniger ausgeprägt, was sich wiederum positiv auf einzuhaltende Fertigungstoleranzen auswirkt.

Ausserdem besteht die Möglichkeit, am erfindungsgemässen Lichtteiler Streulicht besser zu unterdrücken, was die Bildqualität, dabei vor allem den Kontrast, erhöht.

Dies ergibt sich insbesondere dadurch, dass an der erfindungsgemässen Anordnung die geometrischen Verhältnisse flexibel angepasst werden können.

Bevorzugte Ausführungsformen der Erfindung sind in den Ansprüchen 2 bis 18 spezifiziert, ein erfindungsgemässes System in Anspruch 19. Die Erfindung wird anschliessend beispielsweise anhand von Figuren erläutert.

Es zeigen:

Fig. 1 schematisch, eine bevorzugte Ausführungsform einer erfindungsgemässen Anordnung,

Fig. 2 qualitative Spektren an einem Dünnfilm-Schichtsystem der Anordnung gemäss Fig. 1,

Fig. 3a und 3b in Darstellung analog zu Fig. 2, quantitativ Spektren an einem weiteren Dünnfilm-Schichtsystem der Anordnung gemäss Fig. 1,

Fig. 4 in Darstellung analog zu den Fig. 2 und 3, Spektren eines dritten Dünnfilm-Schichtsystems, das an der Anordnung gemäss Fig. 1 vorgesehen ist,

Fig. 5 in einer weiter vereinfachten Darstellung der Anordnung nach Fig. 1, den Strahlengang von aufgrund nicht idealer Verhältnisse fehlgeleiteten Lichtes,

Fig. 6 das Spektrum an einem Dünnfilm-Schichtsystem der Anordnung gemäss Fig. 1, in einer Realisationsform und in Analogie zum Spektrum (a) von Fig. 2,

Fig. 7 in Analogie zu den Spektren ($b_1$) und ($b_2$) von Fig. 2, die realisierten Spektren,

Fig. 8 in Analogie zu den Spektren von Fig. 3b, die an einem beispielsweisen Schichtsystem realisierten Spektren,

Fig. 9 in Analogie zu Fig. 3a, die realisierten Spektren, und

Fig. 10 die in Analogie zu Fig. 4 realisierten Spektren.

Gemäss Fig. 1 ist ein erstes Prisma 1 vorgesehen, mit zwei ersten Flächen 3 und 5, welche zwischen sich den ersten Prismenwinkel $\alpha$ aufspannen. Ein zweites Prisma 7 weist zweite Prismenflächen 9 und 11 auf, welche zwischen sich einen zweiten Prismenwinkel $\beta$ aufspannen. Die erste Prismenfläche 3 und die zweite 11 liegen sich parallel gegenüber, zwischen ihnen ist ein erstes Dünnfilm-Schichtsystem 21 vorgesehen. In der dargestellten, bevorzugten Ausführungsform liegen sich die Prismenflächen 3 und 11 über das Dünnfilm-Schichtsystem 21 luftspaltfrei gegenüber.

Die weitere erste Prismenfläche 5 ihrerseits liegt an der Anordnung gemäss Fig. 1 gegenüber der Fläche 13 eines Polarisations-Strahlteilers 15, wobei ein zweites Dünnfilm-Schichtsystem 19 zwischen diesen Flächen 5, 13 vorgesehen ist, bevorzugterweise wiederum luftspaltfrei.

In der bevorzugten, dargestellten Ausführungsform erstreckt sich das Dünnfilm-Schichtsystem 19 bevorzugt einseitig über den Bereich der sich gegenüberliegenden Flächen 5, 13 hinaus, wo es, bevorzugt luftspaltfrei, zwischen der erwähnten Fläche 5 und der einen Prismenfläche 36 eines weiteren Prismas 37 liegt. Auch auf der andern Seite des erwähnten Bereiches liegt ein weiteres Prisma 39 mit seiner einen Prismenfläche 38 an der Fläche 5 an. Bevorzugt sind die Austrittsflächen der Prismen 37, 39 mit einem Antireflex-Schichtsystem 40 versehen.

Gegenüber der weiteren zweiten Prismafläche 9 liegt die Fläche eines Ausgleichskörpers 35, bevorzugt über ein drittes Dünnfilm-Schichtsystem 23 und luftspaltfrei. Die zwei Prismen 1 und 7 definieren je Austrittsflächen 25 bzw. 29, welchen gegenüber, in der bevorzugten Ausführungsform, Lichtventilanordnungen 27 bzw. 31 vorgesehen sind, vorzugsweise in Reflexion arbeitende Lichtventilanordnungen, wie LCD-Anordnungen.

Mit Hilfe des Ausgleichskörpers 35 wird die schiefe Ausrichtung der Prismenfläche 9 bezüglich einer optischen Achse A ausgeglichen, und es bildet der Ausgleichskörper 35 die dritte Austrittsfläche 32, welcher wiederum eine Lichtventilanordnung 33, vorzugsweise in Form einer in Reflexion arbeitenden Lichtventilanordnung, vorzugsweise einer LCD-Anordnung, zugeordnet ist.

Sichtbares Licht, im allgemeinen weisses Licht L, tritt im wesentlichen senkrecht zu den Flächen 5 und 13 in das erste Prisma 1 ein und mit dem Einfallswinkel $\alpha$ auf das Dünnfilm-Schichtsystem 21. Dort wird Licht eines ersten Spektralbereiches, bevorzugt rotes Licht, reflektiert und fällt mit dem Einfallswinkel $2\alpha$ auf das Dünnfilm-Schichtsystem 19. Dort wird es reflektiert und tritt an der Austrittsfläche 25 aus.

Am Dünnfilm-Schichtsystem 21 wird Licht eines zweiten und dritten Spektralbereiches, bevorzugt grünes und blaues Licht, weitestgehend transmittiert und durchläuft das zweite Prisma 7. Licht des zweiten Spektralbereiches, bevorzugt grünes Licht, wird am Dünnfilm-Schichtsystem 23 unter dem Einfallswinkel ($\beta$ - $\alpha$) reflektiert, dann wiederum am Dünnfilm-Schichtsystem 21 unter dem Einfallswinkel ($2\beta$ - $\alpha$). Darnach tritt es an der Austrittsfläche 29 aus. Das Licht des dritten Spektralbereiches, vorzugsweise blaues Licht, wird am Dünnfilm-Schichtsystem 23 weitestgehend transmittiert und tritt an der Austrittsfläche 32 des Ausgleichskörpers 35 aus. Ausgleichskörper 35, die beiden Prismen 1 und 7, der Polarisations-Strahlteiler 15 und die Prismen 37, 39 sind transparent, z.B. aus Glas.

Das an den erwähnten Austrittsflächen 25, 29, 32 austretende Licht wird bevorzugt an den Lichtventilanordnungen 27, 31, 33 moduliert und, üblicherweise unter Polarisationsänderung, entlang den erwähnten Strahlengängen zurückreflektiert, um dann, wieder rekombiniert, mit umgekehrter Ausbreitungsrichtung bei L auszutreten.

Es ist jedoch ohne weiteres möglich, Licht der erwähnten Spektren von aussen auf in Transmission arbeitende Lichtventilanordnungen 27, 31, 33 aufzubringen, dort zu modulieren und dann die beschriebene Anordnung ausschliesslich als Rekombinationsoptik einzusetzen.

In Fig. 2 sind qualitativ spektrale Transmissionskurven des Dünnfilm-Schichtsystems 19 dargestellt. Unter dem Einfallswinkel von mindestens genähert 0° am Dünnfilm-Schichtsystem 19 ergibt sich die spektrale Transmissionskurve (a), d.h. Licht des sichtbaren Spektralbereiches wird transmittiert.

Das Spektrum ($b_1$) zeigt das Transmissionsverhalten bezüglich S-polarisierten Lichtes, das unter einem Einfallswinkel von 40° auf das Dünnfilm-Schichtsystem 19 auftrifft, während das Spektrum ($b_2$) bei einem Einfallswinkel von 40° das Transmissionsverhalten von P-polarisiertem Licht zeigt.

Wie aus Fig. 1 ersichtlich, wird die durch die Flächennormale auf das Dünnfilm-Schichtsystem festgelegte Achse als optische Achse A bezeichnet. Dabei kann der Polarisations-Strahlteiler 15 um diese Achse rotiert werden. In Fig. 1 ist die Orientierung des Polarisations-Strahlteilers 15 bevorzugt so gewählt, dass auf den Strahlteiler 15 in S-Polarisation auftreffendes Licht bezüglich der erfindungsgemässen Farbteiler-Anordnung P-polarisiertes Licht ist. In einer davon abweichenden Ausführungsform ist der Polarisations-Strahlteiler so um die optische Achse A geschwenkt, dass auf den Polarisations-Strahlteiler 15 einfallendes, S-polarisiertes Licht im Farbteiler auch S-polarisiertes Licht ist.

Im weiteren ist aus Fig. 2 ersichtlich, dass das Reflexionsverhalten des Dünnfilm-Schichtsystems 19 für Licht des ersten Spektralbereiches, bevorzugt für rotes Licht, weitestgehend unabhängig ist von der Polarisation; dieses Licht wird beispielsweise bei $2\alpha$ = 40° jedenfalls weitestgehend reflektiert.

Das erste Prisma 1 und der bevorzugterweise vorgesehene Polarisations-Strahlteiler 15 sind bevorzugt miteinander verkittet, wobei, weiter bevorzugt, das Dünnfilm-Schichtsystem 19 an der Fläche 5 des ersten Prismas 1 aufgebracht ist.

In Fig. 3a ist das Transmissionsverhalten des Dünnfilm-Schichtsystems 21 dargestellt, welches, wie erwähnt wurde, unter dem Winkel $\alpha$ auftreffendes Licht des ersten Spektralbereiches, bevorzugt rotes Licht, mindestens weitestgehend reflektieren soll, Licht der zweiten und dritten Spektralbereiche, bevorzugt blaues und grünes Licht, welches unter dem Winkel $\alpha$ auftrifft, mindestens weitestgehend transmittieren soll. Licht des zweiten Spektralbereiches, bevorzugt grünes Licht, welches unter dem Einfallswinkel ($2\beta$ - $\alpha$) auftrifft, soll daran mindestens weitestgehend reflektiert werden.

Es zeigt der Verlauf ($a_1$) von Fig. 3a das Transmissionsverhalten des Dünnfilm-Schichtsystems 21 bezüglich unter dem Winkel $\alpha$ = 20° einfallenden, P-polarisierten Lichtes, der Verlauf ($a_2$) gilt bezüglich unter dem nämlichen Einfallswinkel $\alpha$ = 20° auftreffenden, S-polarisierten Lichtes.

Daraus ist ersichtlich, dass Licht des ersten Spektralbereiches, bevorzugt rotes Licht, weitestgehend reflektiert wird, im wesentlichen unabhängig von seiner Polarisierung, und dass - wie gefordert - grünes und blaues Licht weitestgehend transmittiert wird.

Es sei nun mit $\alpha$ = 20° weiter beispielsweise gewählt:

$$\beta = 31°$$

Damit ergibt sich $(2\beta - \alpha) = 42°$.

In Fig. 3b ist das Transmissionsspektrum des Dünnfilm-Schichtsystems 21 unter einem Einfallswinkel von 42° für S-polarisiertes Licht, (b1), und für P-polarisiertes Licht, (b2), dargestellt. Daraus ist ersichtlich, dass Licht des zweiten Spektralbereiches, also bevorzugt des grünen Spektralbereiches, am Dünnfilm-Schichtsystem 21 reflektiert wird, wobei sich die Polarisation darauf nicht auswirkt.

Die Flächen 11 und 3 der beiden Prismen 7 und 1 sind wiederum bevorzugt miteinander verkittet, wobei das Dünnfilm-Schichtsystem 21 durch Schichten an der Fläche 3 und/oder an der Fläche 11 realisiert sein kann.

An der Fläche 9 des zweiten Prismas 7 wirkt das dritte Dünnfilm-Schichtsystem 23. Dieses soll, wie erwähnt, Licht des zweiten Spektralbereiches, bevorzugt grünes Licht, welches unter einem Winkel $(\beta - \alpha)$ auf das Schichtsystem 23 auftrifft, weitestgehend reflektieren, während Licht des dritten Spektralbereiches, bevorzugt blaues Licht, welches unter diesem Winkel auf das Dünnfilm-Schichtsystem 23 auftrifft, mindestens weitgehend transmittiert werden soll.

Mit den angegebenen Grössen für $\alpha$ und $\beta$ gilt:

$$\beta - \alpha = 11°$$

In Fig. 4 ist das Transmissionsspektrum des Dünnfilm-Schichtsystems 23 dargestellt bei einem Einfallswinkel von 11°. Dabei bezeichnen $(b_1)$ das Spektrum für S-polarisiertes Licht, $(b_2)$ dasjenige für P-polarisiertes Licht.

Es ist erkenntlich, dass weitestgehend polarisationsunabhängig an diesem Schichtsystem 23 Licht des zweiten Spektralbereiches, nämlich bevorzugt grünes Licht, im wesentlichen reflektiert wird, hingegen des dritten Spektralbereiches, bevorzugt blaues Licht, weitestgehend transmittiert wird.

Wie erwähnt wurde, wird bevorzugterweise das aus den Austrittsflächen 25, 29, 32 austretende Licht der zugeordneten Spektralbereiche, bevorzugt an in Reflexion arbeitenden Lichtventilen 27, 31, 33, reflektiert und tritt rekombiniert aus der erfindungsgemässen Anordnung wieder aus.

Wichtige Grösse am ersten Prisma 1, welches, wie die übrigen Prismen und Körper der Anordnung aus Glas oder optisch ähnlichem Material gefertigt ist, ist, wie ersichtlich wurde, dessen Winkel $\alpha$.

Wie beschrieben wurde, trifft ein Teil des Lichtes unter dem Winkel $2\alpha$ auf das Schichtsystem 19 auf. Die durch diesen Winkel hervorgerufene AdR muss am Schichtsystem 19 ausreichen, um Licht des ersten Spektralbereiches, bevorzugt rotes Licht, unter nahezu senkrechtem Einfall zu transmittieren, anderseits unter einem Einfallswinkel von mindestens genähert $2\alpha$ zu reflektieren.

In der folgenden Tabelle ist beispielsweise aufgelistet, wie sich der 50 %-Cutoff-Punkt bei dem im Beispiel gewählten Dünnfilm-Schichtsystem 19 für P-polarisiertes rotes Licht in Funktion des Einfallswinkels verschiebt.

| Einfallswinkel | 50 % Punkt cutoff |
|---|---|
| 0 | 684 nm |
| 10 | 676 nm |
| 20 | 656 nm |
| 30 | 623 nm |
| 40 | 580 nm |

Für S-polarisiertes Licht ist der 50 %-cutoff-Punkt (s. Fig. 2) bereits so zu niedrigeren Wellenlängen hin verschoben, dass, sobald die erwähnte Bedingung für P-polarisiertes Licht erfüllt ist, sie für S-polarisiertes Licht ohnehin erfüllt ist.

Um den roten Spektralbereich des Lichtes effektiv zu reflektieren, wird bevorzugt gewählt:

$$2\alpha \geq 20°,$$

also

$$\alpha \geq 10°.$$

Je grösser $\alpha$, desto schwerwiegender wird die Polarisationsverschiebung am Schichtsystem 21. Eine natürliche Beschränkung nach oben bildet der Winkel 45°. Hier wird das Licht nicht mehr auf das Schichtsystem 19 zurückgeworfen. Sinnvoll ist es allerdings, $\alpha \leq 30°$ einzuhalten. Dies legt, zusammen mit der Ausdehnung der Lichtventilanordnung 27, die anderen Dimensionen des Prismas 1 fest. Am besten geeignet erscheint heute zu wählen:

$$\alpha = 20° \pm 20\ \%,$$

Die übrigen Winkel des ersten Prismas 1 sind so zu wählen, dass das Licht senkrecht aus dem Prisma auf die Lichtventilanordnung 27 trifft. Es gilt mithin:

$$10° \leq \alpha \leq 45°,$$

dabei bevorzugt

$$10° \leq \alpha \leq 30°,$$

und insbesondere bevorzugt

$$\alpha = 20° \pm 20\ \%.$$

Wichtigste Dimensionierungsgrösse am zweiten Prisma 7 ist der Prismenwinkel $\beta$. Mit $(2\beta - \alpha)$ legt dieser Winkel, in Abhängigkeit von $\alpha$, den Einfallswinkel des vom Schichtsystem 23 reflektierten Lichtes auf das Schichtsystem 21 fest. Die Winkeldifferenz zwischen $\alpha$ und $(2\beta - \alpha)$ legt die optische Wirkung des Dünnfilm-Schichtsystems 21, insbesondere auf das Licht des zweiten Spektralbereiches, bevorzugt des grünen Lichtes, fest. Dabei muss gelten:

$$\alpha < \beta < 1/2\ (90° + \alpha)$$

Daraus ergibt sich für die bevorzugte Dimensionierung von $\beta$:

$$10° \leq \beta \leq 65°.$$

Die übrigen Winkel des Prismas 7 sind so gewählt, dass das Licht des zweiten Spektralbereiches senkrecht aus der Austrittsfläche 29 austritt und auf die Lichtventilanordnung 31 auftritt.

Bevorzugterweise wird, über das Dünnfilm-Schichtsystem 23, die Fläche 9 des zweiten Prismas 7 mit dem Ausgleichskörper 35 verkittet, welcher so dimensioniert ist, dass Licht des dritten Spektralbereiches, bevorzugt blaues Licht, senkrecht aus diesem Körper austritt und, bevorzugt, die optischen Weglängen aller drei Spektralbereiche des Lichtes durch die Anordnung mindestens im wesentlichen gleich sind.

Dabei kann gegebenenfalls eine Lösung darin bestehen, die Weglängen durch örtlich unterschiedliche Plazierung der Lichtventilanordnungen auszugleichen.

Nun ist aber auch Licht zu berücksichtigen, welches aufgrund nicht idealer Verhältnisse, insbesondere nicht idealer Grenzflächen, fehlgeleitet wird. Es wird davon ausgegangen, dass der Polarisations-Strahlteiler 15 so orientiert ist, dass das durch die Schicht 19 tretende Licht bezüglich der Fläche 3 im wesentlichen P-polarisiert ist. Am Schichtsystem 21 sollte - wie erwähnt wurde - idealerweise ausschliesslich Licht des ersten Spektralbereiches, d.h. bevorzugt rotes Licht, reflektiert werden. Aufgrund nicht idealer Grenzflächen wird aber ein kleiner Anteil je des zweiten und dritten Spektralbereiches, also bevorzugt von blauem und grünem Licht, dennoch am Dünnfilm-Schichtsystem 21 reflektiert. Ausserdem ist es oft von Vorteil, Licht des gelben Spektralbereiches bei Durchlaufen zu unterdrücken. Dazu kann der Winkel $\alpha$ und/oder das Schichtsystem 21 ohne weiteres derart ausgelegt werden, dass die oft bei ca. 578 nm auftretende, intensive gelbe Linie in gewünschtem Ausmass am Dünnfilm-Schichtsystem 21 reflektiert wird.

Wie nun anhand von Fig. 2 ersichtlich, wird am Dünnfilm-Schichtsystem 19 gelbes Licht, also Licht mit Spektralanteil sowohl im oberen Wellenlängenbereich des zweiten Spektralbereich, bevorzugt dem grünen Bereich, wie auch im unteren Wellenlängenbereich des ersten, bevorzugt also im roten, am Dünnfilm-Schichtsystem 19 transmittiert. Dieses gelbe Licht - besonders, wenn P-polarisiert, und insbesondere um die Spektrallinie bei ca. 578 nm - wird gemäss Fig. 3a am Dünnfilm-Schichtsystem 21 reflektiert, um dann gemäss Fig. 2 ($b_2$) wiederum transmittiert zu werden. Dabei wird die Spektralkante gemäss Fig. 2 ($b_2$) so gewählt, dass die gelbe Linie in gewünschtem Masse am Dünnfilm-Schichtsystem 19 und unter $2\alpha$ Einfallsrichtung transmittiert wird. Eine effiziente Auskopplung dieses am System 19 transmittierten gelben Lichtes erfolgt durch Vorsehen des anhand von Fig. 1 beschriebenen Prismas 37, das ein Austreten des erwähnten gelben Lichtes unter kleinem Winkel erlaubt.

Licht des ersten Spektralbereiches, also bevorzugt rotes Licht, welches, nicht idealerweise, durch das Dünnfilm-Schichtsystem 21 transmittiert wird, wird (siehe Fig. 4) jedenfalls am Dünnfilm-Schichtsystem 23 reflektiert. Unter dem Einfallswinkel von $(2\beta - \alpha)$ wiederum auf das Schichtsystem 21 gelangend, wird es (siehe Fig. 3b) am Dünnfilm-Schichtsystem 21 transmittiert und trifft unter einem Winkel $2(\beta - \alpha)$ auf Dünnfilm-Schichtsystem 19 auf. Aufgrund des kleinen Einfallswinkels, bei $\alpha = 20°$, $\beta = 31°$, von 22° wird ein wesentlicher Bestandteil dieses Störlichtes durch das gegebenenfalls, wie in Fig. 1 gestrichelt dargestellt, auch zum Prisma 39 ausgedehnte Schichtsystem 19 transmittiert, wobei wiederum das zusätzliche Prisma 39 diesen Effekt unterstützt. In diesem Bereich der Fläche 5 ist mithin eine Antireflexschicht vorgesehen, als welche auch das System 19' wirkt und/oder ein Prisma 39.

Blaues Licht, welches fälschlicherweise am Dünnfilm-Schichtsystem 23 reflektiert wird, wird unter $(2\beta - \alpha)$ am Schichtsystem 21 transmittiert, ebenso am Dünnfilm-Schichtsystem 19 und folgt dem oben erläuterten Weg des roten Streulichtes durch das zusätzliche Prisma 39. Aufgrund der geschilderten Lichtwege ist es klar, dass der Prismenwinkel $\gamma$ des Prismas 37 bevorzugt und mindestens genähert zu $\gamma = 2\alpha$ gewählt wird, der Winkel $\delta$ des Prismas 39 mindestens genähert zu $\delta = 2(\beta - \alpha)$.

In Fig. 6, ist, ausgehend von der Darstellung nach Fig. 1, der eben beschriebene Pfad des gelben I und roten bzw. blauen Streulichtes II dargestellt.

Wenn somit, wie bevorzugt, Licht L gemäss Fig. 1 in P-Polarisation eingekoppelt wird, was z.B. durch geeignete Ausrichtung des Polarisations-Strahlteilers 15 einfach realisierbar ist, oder durch eine zusätzliche $\lambda/2$-Platte zwischen Polarisations-Strahlteier 15 und Dünnfilm-Schichtsystem 19, so wird:

| | |
|---|---|
| Streulicht des ersten Spektralbereiches, rotes Licht | - am System 23 unter $(\beta - \alpha)$, z.B. 11°, (Fig. 4) reflektiert,<br>- am System 21 unter $(2\beta - \alpha)$, z.B. 42°, Fig. 3b ($b_2$) transmittiert,<br>- am System 19 unter $2(\beta - \alpha)$, z.B. 22°, (Fig. 2, zwischen (a) und ($b_2$)) transmittiert<br>- und verlässt die Anordnung durch Prisma 39. |
| Streulicht des dritten Spektralbereiches, blaues Licht | - am System 21 unter $(2\beta - \alpha)$, z.B. 42°, Fig. 3b ($b_2$) transmittiert,<br>- am System 19, unter $2(\beta - \alpha)$, z.B. 22°, (Fig. 2) transmittiert<br>- und verlässt die Anordnung durch Prisma 39. |
| Gelbes Licht (582 nm ±) | - am System 21 unter $\alpha$, z.B. 20°, weitgehend reflektiert (Fig. 3a, ($a_1$)),<br>- am System 19, unter $2\alpha$, z.B. 40°, (Fig. 2 ($b_2$)) weitgehend transmittiert<br>- und verlässt weitgehend die Anordnung durch Prisma 37. |

Eine analoge Streulicht-Unterdrückung ist auch bei S-polarisiertem eintretenden Licht L möglich. Die Selektion findet jedoch dann weitestgehend nach der Reflexion an den Lichtventilen statt, da letztere bei Reflexion die Polarisation des Lichtes ändern.

Zu Erhöhung der Auskopplung von fehlgeleitetem Licht, also gelben Lichtes, am Prisma 37 bzw. blauen bzw. roten Lichtes am Prisma 39, wird in einer bevorzugten Ausführungsform und wie in Fig. 1 bei 40 dargestellt jeweils zwischen den erwähnten Prismen 37, 39 und dem Dünnfilm-Schichtsystem 19 eine Antireflexschicht vorgesehen.

In der nachfolgenden Tabelle sind Beispiele für die Realisation der Dünnfilm-Schichtsysteme 19, 21 und 23 dargestellt. Die Schichten aus Material mit höherem Brechwert, H, sind aus $TiO_2$ ($n \approx 2{,}4$), die Schichten aus niedriger brechendem Material sind aus $SiO_2$ ($n \approx 1{,}46$). Als Substratmaterial wird Glas mit $n \approx 1{,}6$ vorgesehen.

Die Schichtnumerierung erfolgt in der Reihenfolge, mit welcher sie auf das jeweilige Substrat (Prismen) abgelegt werden.

| Schichtnr | Dünnfilmsystem 19 | | Dünnfilmsystem 21 | | Dünnfilmsystem 23 | |
|---|---|---|---|---|---|---|
| | Dicken in nm | | Dicken in nm | | Dicken in nm | |
| 1 | H | 96.91 | H | 92.44 | H | 69.71 |
| 2 | L | 151.89 | L | 138.41 | L | 126.17 |
| 3 | H | 83.62 | H | 73.40 | H | 56.21 |
| 4 | L | 144.53 | L | 148.47 | L | 99.33 |
| 5 | H | 80.56 | H | 53.04 | H | 68.30 |
| 6 | L | 144.12 | L | 164.16 | L | 104.93 |
| 7 | H | 78.31 | H | 48.87 | H | 57.72 |
| 8 | L | 145.42 | L | 161.54 | L | 97.92 |
| 9 | H | 76.73 | H | 51.22 | H | 63.03 |
| 10 | L | 147.18 | L | 159.18 | L | 108.91 |
| 11 | H | 75.50 | H | 50.39 | H | 59.40 |
| 12 | L | 148.37 | L | 180.56 | L | 96.74 |
| 13 | H | 74.52 | H | 51.25 | H | 59.40 |
| 14 | L | 148.74 | L | 156.96 | L | 108.91 |
| 15 | H | 74.52 | H | 52.18 | H | 63.03 |
| 16 | L | 148.37 | L | 158.14 | L | 97.92 |
| 17 | H | 75.50 | H | 51.32 | H | 57.72 |
| 18 | L | 147.18 | L | 157.58 | L | 104.93 |
| 19 | H | 76.73 | H | 52.41 | H | 68.30 |
| 20 | L | 145.42 | L | 156.79 | L | 99.33 |
| 21 | H | 78.31 | H | 51.58 | H | 56.21 |
| 22 | L | 144.12 | L | 158.96 | L | 126.17 |
| 23 | H | 80.56 | H | 51.23 | H | 69.71 |
| 24 | L | 144.53 | L | 158.02 | | |
| 25 | H | 83.62 | H | 51.35 | | |
| 26 | L | 151.89 | L | 160.50 | | |
| 27 | H | 96.91 | H | 49.60 | | |
| 28 | | | L | 162.95 | | |
| 29 | | | H | 48.96 | | |
| 30 | | | L | 164.50 | | |
| 31 | | | H | 46.73 | | |
| 32 | | | L | 172.06 | | |
| 33 | | | H | 46.90 | | |
| 34 | | | L | 183.78 | | |
| 35 | | | H | 32.01 | | |
| 36 | | | L | 173.14 | | |
| 37 | | | H | 101.40 | | |
| 38 | | | L | 33.33 | | |
| 39 | | | H | 15.00 | | |
| claus heine, SE<br>phipri_designs_1.doc | | | | | | |

Aus dem in vorangehender Tabelle zusammengestellten Design ergeben sich:

- am Dünnfilm-Schichtsystem 19 das Spektrum gemäss Fig. 6 in Analogie zum Spektrum gemäss Spektrum (a) von Fig. 2,
- die Spektren gemäss Fig. 7 (s. Fig. 2), für Licht unter 40° Einfallswinkel, S-polarisiertes gemäss ($b_1$) und P-polarisiertes gemäss ($b_2$),

- Spektren gemäss Fig. 8, in Analogie zu Fig. 3b am Schichtsystem 21, ($b_1$) für S-polarisiertes, ($b_2$) für P-polarisiertes, jeweils mit 42° Einfallswinkel auftreffendes Licht,

- Spektrum gemäss Fig. 9, in Analogie zu Fig. 3a am Dünnfilm-Schichtsystem 21, ($a_2$) für S-polarisiertes, ($a_1$) für P-polarisiertes Licht unter einem Einfallswinkel von 20°,

- Spektrum gemäss Fig. 10 in Analogie zu Fig. 4 am Dünnfilm-Schichtsystem 23, bei einem Einfallswinkel von 11°, ($b_1$) für S-polarisiertes, ($b_2$) für P-polarisiertes Licht.

Mit der erfindungsgemässen Anordnung werden insbesondere folgende Vorteile erwirkt:

Die Anordnung kann direkt mit einem Strahlteiler 15 verkittet werden, ohne dass ein Luftspalt nötig wäre und ohne dass eine zusätzliche Antireflexionsbeschichtung zwischen Strahlteiler 15 und dem Prisma 1 nötig wäre, wie dies bei Vorsehen eines Luftspaltes notwendig ist.

Mit der erfindungsgemässen Anordnung lassen sich erfindungsgemäss optische Farbmanagementsysteme aufbauen, wie z.B. Projektoren, Monitore, Videokameras, Digitalstandbildkameras etc.

Gegenüber den X-Cubes weist die erfindungsgemässe Anordnung den Vorteil auf, dass eine Zenterlinie fehlt sowie dadurch, dass wesentlich kleinere Lichteinfallswinkel ausgenützt werden, dass die Polarisations-Unabhängigkeit für Transmissions- und Reflexionswerte, mindestens in gewissen Spektralbereichen, erhöht ist.

Dass an ein und demselben Dünnfilm-Schichtsystem (21, 19) Licht ein und desselben Spektralbereiches lediglich in Funktion des Einfallswinkels transmittiert bzw. reflektiert wird, wird zur Umgehung von Totalreflexionen konsequent ausgenützt.

Zu den Vorteilen zählt auch, dass fehlgeleitetes Licht in der oben mit Hilfe von Fig. 5 beschriebenen Weise durch Wahl bzw. Design der Dünnfilm-Schichtsysteme effizient ausgeblendet wird, was sich positiv auf die Bildqualität und damit den Kontrast auswirkt. Insbesondere erlaubt die erfindungsgemässe Anordnung eine effiziente Ausblendung der oftmals intensiven Gelblinie.

**Bezugszeichenliste:**

| | |
|---|---|
| 1 | erstes Prisma |
| 3 | erste Fläche |
| 5 | erste Fläche |
| α | erster Prismenwinkel |
| 7 | zweites Prisma |
| 9 | zweite Prismenfläche |
| 11 | zweite Prismenfläche |
| β | zweiter Prismenwinkel |
| 13 | Fläche |
| 15 | Polarisations-Strahlteiler |
| 19 | Dünnfilm-Schichtsystem |
| 21 | Dünnfilm-Schichtsystem |
| 23 | Dünnfilm-Schichtsystem |
| 24 | Austrittsfläche |
| 25 | Austrittsfläche |
| 27 | LCD |
| 29 | Austrittsfläche |
| 31 | LCD |
| 32 | Austrittsfläche |
| 33 | LCD |
| 35 | Ausgleichskörper |
| 36 | Prismenfläche |
| 37 | Prisma |
| 38 | Prismenfläche |
| 39 | Prisma |
| 40 | Antireflex-Schichtsystem |
| A | Optische Achse |

## Patentansprüche

1. Anordnung zur spektralen Farbaufteilung und/oder Rekombination von Licht, umfassend

   - ein erstes Prisma (1) mit zwei ersten Flächen (3, 5), die zwischen sich einen ersten Prismenwinkel ($\alpha$) einschliessen,
   - ein zweites Prisma (7) mit zwei zweiten Flächen (9, 11), die zwischen sich einen zweiten Prismenwinkel ($\beta$) definieren,

   wobei sich je eine erste (3) und eine zweite (11) Fläche parallel gegenüberliegen und die beiden Winkel ($\alpha$, $\beta$) bezüglich der sich gegenüberliegenden Flächen (3, 11) in Wechselwinkelanordnung liegen,
   wobei weiter

   - Licht eines ersten Spektralbereiches (R) bei im wesentlichen senkrechtem Auftreffen auf die andere (5) der ersten Prismenflächen (3, 5) nach Eindringen in das erste Prisma (1) und Doppelreflexion (19, 21) an dessen ersten Flächen das erste Prisma verlässt,
   - Licht eines zweiten (G) und dritten (B) Spektralbereiches bei im wesentlichen senkrechtem Auftreffen auf die andere (5) der ersten Flächen (3, 5) im wesentlichen unreflektiert durch das erste Prisma (1) durchläuft,
   - Licht des zweiten Spektralbereiches (G) nach Verlassen des ersten Prismas (1) und Eindringen in das zweite Prisma (7) und Doppelreflexion (21, 23) an dessen zweiten Flächen das zweite Prisma (7) verlässt,
   - Licht des dritten Spektralbereiches (B) im wesentlichen unreflektiert auch durch das zweite Prisma (7) durchläuft,

   **dadurch gekennzeichnet, dass**
   luftspaltfrei zwischen den sich gegenüberliegenden ersten und zweiten Flächen (3, 11) ein Dünnfilm-Schichtsystem (21) vorgesehen ist, dessen spektrales Reflexionsverhalten in Abhängigkeit vom Einfallswinkel des reflektierten Lichtes mit dem ersten und zweiten Winkel ($\alpha$, $\beta$) derart abgestimmt ist, dass Licht des ersten Spektralbereiches (R) bei einem Einfallswinkel, der mindestens genähert gleich dem ersten Prismenwinkel ($\alpha$) ist, mindestens weitestgehend reflektiert wird und unter diesem Einfallswinkel ($\alpha$) einfallendes Licht des zweiten und dritten Spektralbereiches (G, B) mindestens weitestgehend transmittiert wird, Licht des zweiten Spektralbereiches (G) bei einem Einfallswinkel ($2\beta$ - $\alpha$), der mindestens genähert gleich der Differenz des doppelten zweiten Prismenwinkels ($2\beta$) und des ersten Prismenwinkels ($\alpha$), mindestens weitestgehend reflektiert wird.

2. Anordnung nach Anspruch 1, **dadurch gekennzeichnet, dass** Licht des ersten Spektralbereiches rotes Licht, des zweiten Spektralbereiches grünes Licht und des dritten Spektralbereiches blaues Licht ist.

3. Anordnung nach einem der Ansprüche 1 oder 2, **dadurch gekennzeichnet, dass** im Bereich der andern (5) der ersten Flächen (3, 5) ein weiteres Dünnfilm-Schichtsystem (19) vorgesehen ist, welches bei im wesentlichen senkrechtem Einfall von Licht des ersten, zweiten und dritten Spektralbereiches (R, G, B) dieses Licht weitgehend transmittiert und Licht des ersten Spektralbereiches (R) bei einem Einfallswinkel von mindestens genähert dem doppelten ersten Prismenwinkel ($2\alpha$) mindestens weitestgehend reflektiert.

4. Anordnung nach einem der Ansprüche 1 bis 3, **dadurch gekennzeichnet, dass** im Bereich der anderen (9) der zweiten Flächen (9, 11) ein zusätzliches Dünnfilm-Schichtsystem (23) vorgesehen ist, welches unter einem Einfallswinkel, welcher mindestens genähert gleich der Differenz ($\beta$ - $\alpha$) des zweiten ($\beta$) und des ersten ($\alpha$) Prismenwinkels ist, Licht des zweiten Spektralbereiches (G) mindestens weitestgehend reflektiert und Licht des dritten Spektralbereiches (B) mindestens weitestgehend transmittiert und weiter, bevorzugterweise, Licht des ersten Spektralbereiches (R) mindestens weitestgehend reflektiert.

5. Anordnung nach einem der Ansprüche 1 bis 4, **dadurch gekennzeichnet, dass** Licht des zweiten (G) und/oder dritten (B) spektralbereiches, das an dem zwischen den sich gegenüberliegenden ersten und zweiten Flächen (3, 11) vorgesehenen Dünnfilm-Schichtsystem (21) reflektiert wird, nach Durchlaufen des ersten Prismas dieses im wesentlich unreflektiert im Bereich der anderen ersten Fläche (5) verlässt.

6. Anordnung nach Anspruch 5, **dadurch gekennzeichnet, dass** ein weiteres Prisma (37) mit einer seiner Flächen gegenüber der anderen ersten Fläche (5) angeordnet ist, in einem Bereich, in welchem das erwähnte Licht des zweiten (G) und/oder dritten (B) Spektralbereiches nach der Reflexion auftrifft.

7. Anordnung nach Anspruch 6, **dadurch gekennzeichnet, dass** im erwähnten Bereich ein Dünnfilm-Schichtsystem (19) an der anderen ersten Fläche (5) vorhanden ist.

8. Anordnung nach einem der Ansprüche 1 bis 7, **dadurch gekennzeichnet, dass** das Dünnfilm-Schichtsystem (21) zwischen den sich gegenüberliegenden ersten und zweiten Flächen (3, 11) gelbes Licht unter einem Einfallswinkel, der mindestens genähert gleich dem ersten Prismenwinkel ($\alpha$) ist, mindestens weitgehend reflektiert wird und dass bevorzugt ein vorzugsweise im Bereich der anderen (5) ersten Fläche (3, 5) vorgesehenes, weiteres Dünnfilm-Schichtsystem (19) gelbes Licht enter einem Einfallswinkel, der mindestens genähert gleich dem doppelten ersten Prismenwinkel ($2\alpha$) ist, transmittiert.

9. Anordnung nach Anspruch 4, **dadurch gekennzeichnet, dass** an dem zusätzlichen Dünnfilm-Schichtsystem (23) Licht des ersten Spektralbereiches (R) reflektiert wird und das zweite (7) und erste (1) Prisma im wesentlichen unreflektiert verlässt.

10. Anordnung nach Anspruch 9, **dadurch gekennzeichnet, dass** ein weiteres Prisma (39) mit einer Fläche der anderen ersten Fläche (5) in einem Bereiche gegenüberliegt, in welchem das Licht des ersten und/oder dritten Spektralbereiches (R, B) einfällt.

11. Anordnung nach Anspruch 10, **dadurch gekennzeichnet, dass** an der anderen ersten Fläche (5) in einem Bereich, in welchem das Licht des ersten und/oder dritten Spektralbereiches (R, B) einfällt, eine Antireflexschicht vorhanden ist.

12. Anordnung nach einem der Ansprüche 1 bis 11, **dadurch gekennzeichnet, dass** für den ersten Prismenwinkel ($\alpha$) gilt:

$$10° \leq \alpha \leq 45°,$$

bevorzugt

$$10° \leq \alpha \leq 30°,$$

und insbesondere bevorzugt

$$\alpha = 20° \pm 20\ \%.$$

13. Anordnung nach einem der Ansprüche 1 bis 12, **dadurch gekennzeichnet, dass** für den zweiten Prismenwinkel ($\beta$) gilt:

$$\alpha < \beta < 1/2\ (90° + \alpha)$$

und bevorzugt:

$$10° \leq \beta \leq 65°.$$

14. Anordnung nach einem der Ansprüche 1 bis 13, **dadurch gekennzeichnet, dass** gegenüber der anderen zweiten Fläche (9) eine Fläche eines transparenten Ausgleichskörpers (35) liegt.

15. Anordnung nach einem der Ansprüche 1 bis 14, **dadurch gekennzeichnet, dass** die optischen Weglängen für Licht der drei Spektralbereiche durch die Anordnung im wesentlichen gleich sind.

**16.** Anordnung nach einem der Ansprüche 1 bis 15, **dadurch gekennzeichnet, dass** im Bereich jeweils einer Austrittsfläche aus der Anordnung für Licht je der drei Spektralbereiche eine Antireflexschicht und/oder je ein Lichtventil, wie eine LCD-Anordnung, vorzugsweise je ein in Reflexion arbeitendes Lichtventil, wie eine derartige LCD-Anordnung, vorgesehen ist.

**17.** Anordnung nach einem der Ansprüche 1 bis 16, **dadurch gekennzeichnet, dass**, vorzugsweise luftspaltfrei, die andere (5) erste Fläche an einem weiteren optischen Bauelement (15) anliegt, vorzugsweise an einem Polarisationsstrahlteiler, wobei vorzugsweise das nach dem optischen Bauelement (15) in die übrige Anordnung (19) eintretende Licht im wesentlichen P-polarisiert ist.

**18.** Optisches Farbmanagementsystem mit einer Anordnung nach einem der Ansprüche 1 bis 17.

**Claims**

**1.** Arrangement for spectral colour division and/or recombination of light, comprising:

- a first prism (1) with two first faces (3, 5), which between them enclose a first prism angle ($\alpha$),
- a second prism (7) with two second faces (9, 11) which between them define a second prism angle ($\beta$),

where in each case one first (3) and one second (11) face lie parallel opposite each other and the two angles ($\alpha$, $\beta$) lie in alternating angle arrangement in relation to the two opposing faces (3, 11), where also

- light from a first spectral range (R), essentially incident perpendicularly on the other (5) of the first prism faces (3, 5), after entering the first prism (1) and double reflection (19, 21) on its first faces, leaves the first prism,
- light from a second (G) and third (B) spectral range essentially incident perpendicularly on the other (5) of the first faces (3, 5) passes essentially unreflected through the first prism (1),
- light from the second spectral range (G) after leaving the first prism (1) and entering the second prism (7) and double reflection (21, 23) at its second faces, leaves the second prism (7),
- light from the third spectral range (B) passes essentially unreflected also through the second prism (7),

**characterised in that** without an air gap between the opposing first and second faces (3, 11) is provided a thin film layer system (21), the spectral reflection behaviour of which as a function of the incident angle of the reflected light is set with the first and second angles ($\alpha$, $\beta$) such that light from the first spectral range (R) with an incident angle at least approximately equal to the first prism angle ($\alpha$) is at least largely reflected, and light incident under this incident angle ($\alpha$) from the second and third spectral ranges (G, B) is at least largely transmitted, light from the second spectral range (G) at an incident angle ($2\beta - \alpha$) which is at least approximately equal to the difference between double the second prism angle ($2\beta$) and the first prism angle ($\alpha$), is at least largely reflected.

**2.** Arrangement according to claim 1, **characterised in that** the light from the first spectral range is red light, that from the second spectral range is green light and that from the third spectral range is blue light.

**3.** Arrangement according to one of claims 1 or 2, **characterised in that** in the area of the other (5) of the first faces (3, 5) a further thin film layer system (19) is provided which, on essentially vertical incidence of the light from the first, second and third spectral ranges (R, G, B), largely transmits this light and at least largely reflects light from the first spectral range (R) at an incident angle at least approximately equal to double the first prism angle ($2\alpha$).

**4.** Arrangement according to any of claims 1 to 3, **characterised in that** in the area of the other (9) of the second faces (9, 11) is provided an extra thin film layer system (23) which, under an incident angle which is at least approximately equal to the difference ($\beta - \alpha$) between the second ($\beta$) and the first ($\alpha$) prism angle, at least largely reflects light from the second spectral range (G) and at least largely transmits light from the third spectral range (B) and furthermore preferably at least largely reflects light from the first spectral range (R).

**5.** Arrangement according to any of claims 1 to 4, **characterised in that** light from the second (G) and/or third (B) spectral range which is reflected on the thin film layer system (21) provided between the two opposing first and second faces (3, 11), after passing through the first prism leaves this essentially unreflected in the area of the other first face (5).

6. Arrangement according to claim 5, **characterised in that** a further prism (37) is arranged with one of its faces opposite the other first face (5) in an area in which the said light from the second (G) and/or third (B) spectral ranges is incident after reflection.

7. Arrangement according to claim 6, **characterised in that** in the said area a thin film layer system (19) is provided on the other first face (5).

8. Arrangement according to any of claims 1 to 7, **characterised in that** the thin film layer system (21) between the opposing first and second faces (3, 11), at least largely reflects yellow light under an incident angle at least approximately equal to the first prism angle ($\alpha$) and that preferably a further thin film layer system (19) preferably provided in the area of the other (5) first face (3, 5) transmits yellow light under an incident angle at least approximately equal to double the first prism angle ($2\alpha$).

9. Arrangement according to claim 4, **characterised in that** at the additional thin film layer system (23) light from the first spectral range (R) is reflected and leaves the second (7) and first (1) prism essentially unreflected.

10. Arrangement according to claim 9, **characterised in that** a further prism (39) lies with one face opposite the other first face (5) in an area in which the light from the first and/or third spectral ranges (R, B) is incident.

11. Arrangement according to claim 10, **characterised in that** on the other first face (5) in an area in which the light from the first and/or third spectral ranges (R, B) is incident, an anti-reflective coating is provided.

12. Arrangement according to any of claims 1 to 11, **characterised in that** for the first prism angle ($\alpha$) the following applies:

$$10^\circ \leq \alpha \leq 45^\circ,$$

preferably

$$10^\circ \leq \alpha \leq 30^\circ,$$

and in particular preferably

$$\alpha = 20^\circ \pm 20\%.$$

13. Arrangement according to any of claims 1 to 12, **characterised in that** for the second prism angle ($\beta$) the following applies:

$$\alpha < \beta < 1/2\ (90^\circ + \alpha)$$

and preferably

$$10^\circ \leq \beta \leq 65^\circ.$$

14. Arrangement according to any of claims 1 to 13, **characterised in that** opposite the other second surface (9) lies a face of a transparent compensating body (35).

15. Arrangement according to any of claims 1 to 14, **characterised in that** the optical path lengths for light from the three spectral ranges through the arrangement are essentially equal.

16. Arrangement according to any of claims 1 to 15, **characterised in that** in area of each outlet face of the arrangement for light from each of the three spectral ranges, an anti-reflective layer and/or a light valve is provided such as an LCD arrangement, preferably a light valve working in reflection e.g. such an LCD arrangement.

**17.** Arrangement according to any of claims 1 to 16, **characterised in that** the other (5) first face lies preferably without an air gap on a further optical construction element (15), preferably a polarisation beam splitter, where preferably the light entering the remaining arrangement (19) after the optical construction element (15) is essentially P-polarised.

**18.** Optical colour management system with an arrangement according to any of claims 1 to 17.

**Revendications**

**1.** Dispositif pour la séparation chromatique spectrale et/ou la recombinaison de lumière, comprenant

- un premier prisme (1) avec deux premières surfaces (3, 5) qui définissent un premier angle de prisme (α),
- un second prisme (7) avec deux secondes surfaces (9, 11) qui définissent un second angle de prisme (β),

étant précisé qu'une première (3) et une seconde surface (11) se font face parallèlement et que les deux angles (α, β) présentent une disposition d'angles alternés par rapport aux surfaces (3, 11) qui se font face,
et étant précisé également

- que la lumière d'une première zone spectrale (R), lorsqu'elle arrive sensiblement perpendiculairement sur la seconde (5) des premières surfaces de prisme (3, 5), quitte le premier prisme (1) après être entrée dans celui-ci et après une double réflexion (19, 21) sur les premières surfaces dudit premier prisme,
- que la lumière d'une deuxième (G) et d'une troisième (B) zone spectrale, lorsqu'elle arrive sensiblement perpendiculairement sur la seconde (5) des premières surfaces (3, 5), traverse le premier prisme (1) pratiquement sans réflexion,
- la lumière de la deuxième zone spectrale (G), après avoir quitté le premier prisme (1), être entrée dans le second prisme (7) et avoir subi une double réflexion (21, 23) sur les secondes surfaces dudit second prisme (7), quitte celui-ci,
- la lumière de la troisième zone spectrale (B) traverse également le second prisme (7) pratiquement sans réflexion,

**caractérisé en ce qu'**il est prévu, sans interstice entre les première et seconde surfaces (3, 11) qui se font face, un système de couche mince (21) dont la réflexion spectrale est adaptée en fonction de l'angle d'incidence de la lumière réfléchie avec les premier et second angles (α, β), pour que la lumière de la première zone spectrale (R), avec un angle d'incidence au moins approximativement égal au premier angle de prisme (α), soit réfléchie au moins en grande partie, que la lumière des deuxième et troisième zones spectrales (G, B) qui arrive sous cet angle d'incidence (α) soit transmise au moins en grande partie et que la lumière de la deuxième zone spectrale (G), avec un angle d'incidence (2β-α) au moins approximativement égal à la différence du double du second angle de prisme (2β) et du premier angle de prisme (α) soit au moins en grande partie réfléchie.

**2.** Dispositif selon la revendication 1, **caractérisé en ce que** la lumière de la première zone spectrale est une lumière rouge tandis que celle de la deuxième zone spectrale est une lumière verte, et celle de la troisième zone spectrale une lumière bleue.

**3.** Dispositif selon la revendication 1 ou 2, **caractérisé en ce qu'**il est prévu dans la zone de la seconde (5) des premières surfaces (3, 5) un autre système de couche mince (19) qui, lorsqu'une lumière des première, deuxième et troisième zones spectrales (R, G, B) arrive sensiblement perpendiculairement, transmet cette lumière en grande partie, et réfléchit en grande partie la lumière de la première zone spectrale (R) avec un angle d'incidence égal au moins approximativement au double du premier angle de prisme (2α).

**4.** Dispositif selon l'une des revendications 1 à 3, **caractérisé en ce qu'**il est prévu dans la zone de la seconde (9) des secondes surfaces (9, 11) un système de couche mince supplémentaire (23) qui, avec un angle d'incidence au moins approximativement égal à la différence (β-α) du second (β) et du premier (α) angle de prisme, réfléchit au moins en grande partie la lumière de la deuxième zone spectrale (G), qui transmet au moins en grande partie la lumière de la troisième zone spectrale (B) et qui réfléchit également au moins en grande partie, de préférence, la lumière de la première zone spectrale (R).

**5.** Dispositif selon l'une des revendications 1 à 4, **caractérisé en ce que** la lumière de la deuxième (G) et/ou de la troisième (B) zone spectrale qui est réfléchie sur le système de couche mince (21) prévu entre les première et seconde surfaces (3, 11) qui se font face quitte le premier prisme, après l'avoir traversé, pratiquement sans réflexion dans la zone de l'autre première surface (5).

**6.** Dispositif selon la revendication 5, **caractérisé en ce qu'**un autre prisme (37) est disposé avec l'une de ses surfaces face à l'autre première surface (5), dans une zone où la lumière mentionnée de la deuxième (G) et/ou de la troisième (B) zone spectrale arrive après la réflexion.

**7.** Dispositif selon la revendication 6, **caractérisé en ce que** dans la zone mentionnée, un système de couche mince (19) est prévu sur l'autre première surface (5).

**8.** Dispositif selon l'une des revendications 1 à 7, **caractérisé en ce que** le système de couche mince (21) prévu entre les première et seconde surfaces (3, 11) qui se font face réfléchit au moins en grande partie la lumière jaune sous un angle d'incidence qui est au moins approximativement égal au premier angle de prisme ($\alpha$), et **en ce que** de préférence, un autre système de couche mince (19) prévu de préférence dans la zone de la seconde (5) des premières surfaces (3, 5) transmet la lumière jaune sous un angle d'incidence qui est au moins approximativement égal au double du premier angle de prisme ($2\alpha$).

**9.** Dispositif selon la revendication 4, **caractérisé en ce que** sur le système de couche mince supplémentaire (23), la lumière de la première zone spectrale (R) est réfléchie et quitte le second prisme (7) et le premier prisme (1) pratiquement sans réflexion.

**10.** Dispositif selon la revendication 9, **caractérisé en ce qu'**un autre prisme (39) fait face, avec une surface, à l'autre première surface (5) dans une zone où arrive la lumière de la première et/ou de la troisième zone spectrale (R, B).

**11.** Dispositif selon la revendication 10, **caractérisé en ce qu'**une couche antireflet est prévue sur l'autre première surface (5), dans une zone où arrive la lumière de la première et/ou de la troisième zone spectrale (R, B).

**12.** Dispositif selon l'une des revendications 1 à 11, **caractérisé en ce qu'**on a pour le premier angle de prisme ($\alpha$) :

$$10° \leq \alpha \leq 45°,$$

de préférence

$$10° \leq \alpha \leq 30°,$$

et plus spécialement

$$\alpha = 20° \pm 20\ \%.$$

**13.** Dispositif selon l'une des revendications 1 à 12, **caractérisé en ce qu'**on a pour le second angle de prisme ($\beta$) :

$$\alpha < \beta < 1/2(90°+\alpha)$$

et de préférence

$$10° \leq \beta \leq 65°.$$

**14.** Dispositif selon l'une des revendications 1 à 13, **caractérisé en ce qu'**une surface d'un corps d'égalisation transparent (35) fait face à l'autre seconde surface (9).

**15.** Dispositif selon l'une des revendications 1 à 14, **caractérisé en ce que** les trajets optiques pour la lumière des trois zones spectrales qui traversent le dispositif sont sensiblement les mêmes.

**16.** Dispositif selon l'une des revendications 1 à 15, **caractérisé en ce qu'**il est prévu dans la zone d'une surface de sortie du dispositif, pour la lumière de chacune des trois zones spectrales, une couche antireflet et/ou un variateur de lumière tel qu'un dispositif à cristaux liquides, de préférence un variateur de lumière fonctionnant pour la réflexion comme un dispositif à cristaux liquides.

**17.** Dispositif selon l'une des revendications 1 à 16, **caractérisé en ce que** l'autre (5) première surface est appliquée de préférence sans interstice contre un autre composant optique (15), de préférence un séparateur de faisceau de polarisation, la lumière qui entre dans le reste du dispositif (19) après le composant optique (15) étant pratiquement polarisée P.

**18.** Système optique de gestion des couleurs comportant un dispositif selon l'une des revendications 1 à 17.

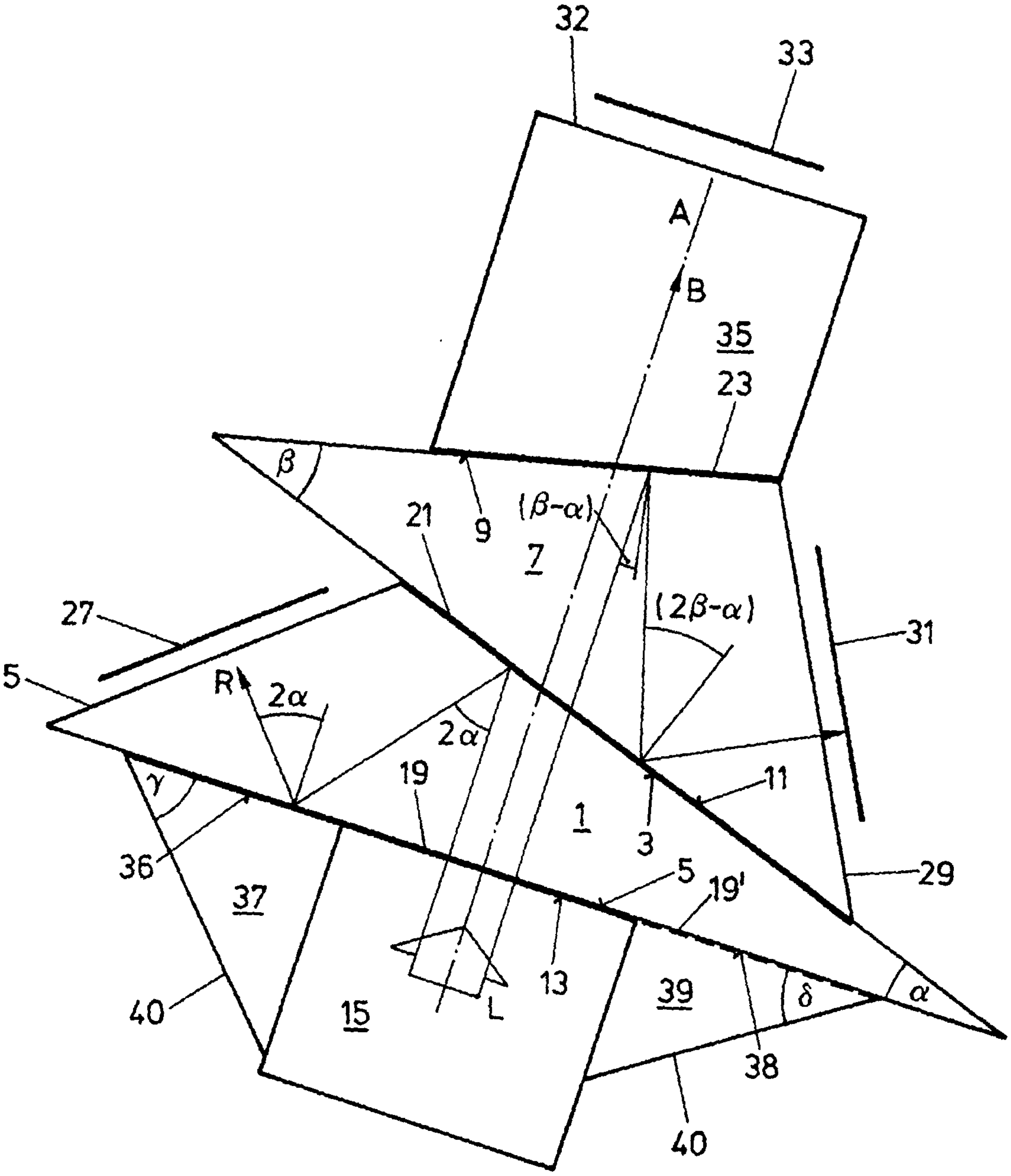
32
33
A
B
35
23
β
(β-α)
21
9
7
(2β-α)
31
27
25
R
2α
2α
19
1
11
3
γ
36
37
5
19'
29
13
L
39
δ
α
40
15
38
40

FIG.1

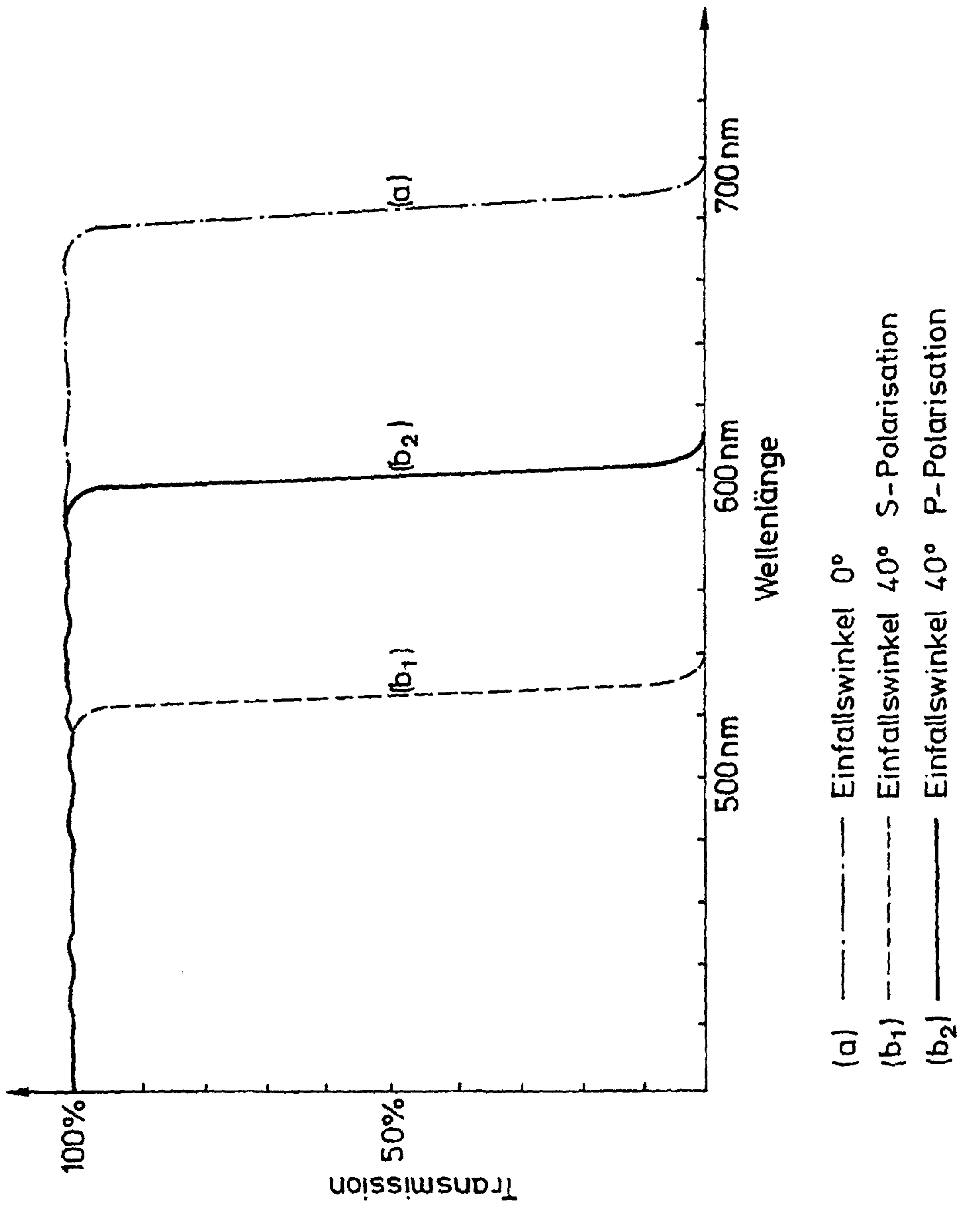
Transmission
100%
50%
500nm
600nm
700nm
Wellenlänge
(a)
(b1)
(b2)
(a) Einfallswinkel 0°
(b1) Einfallswinkel 40° S-Polarisation
(b2) Einfallswinkel 40° P-Polarisation

FIG. 2

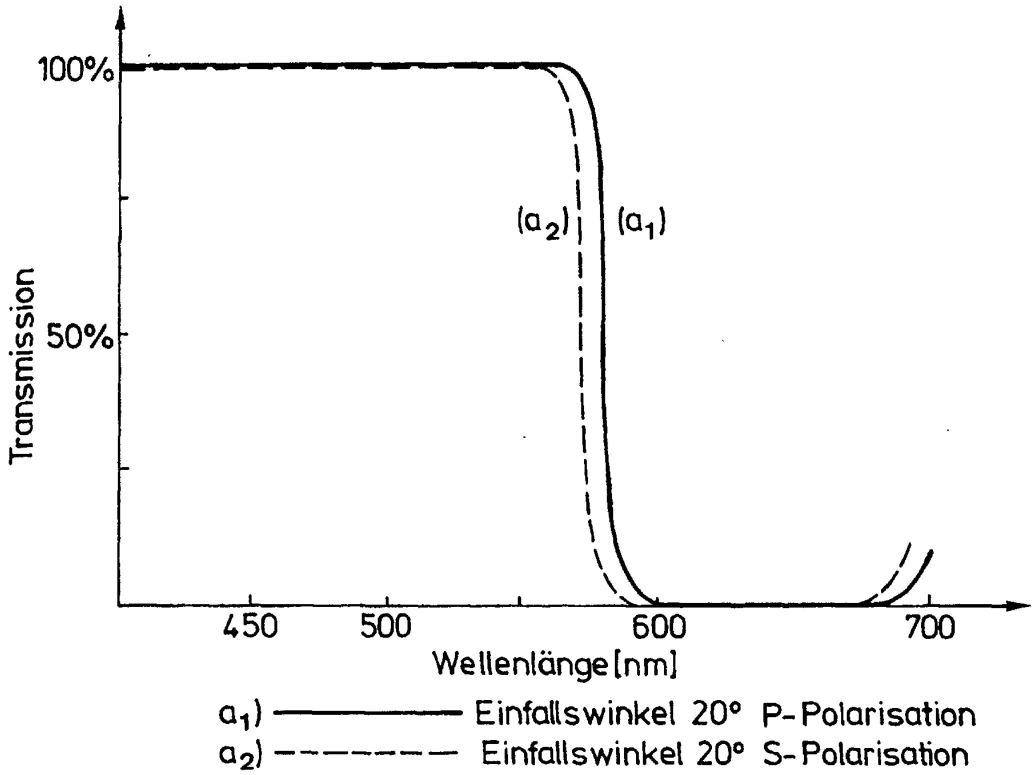
100%
50%
Transmission
(a2)
(a1)
450
500
600
700
Wellenlänge [nm]
a1) Einfallswinkel 20° P-Polarisation
a2) Einfallswinkel 20° S-Polarisation

FIG.3a

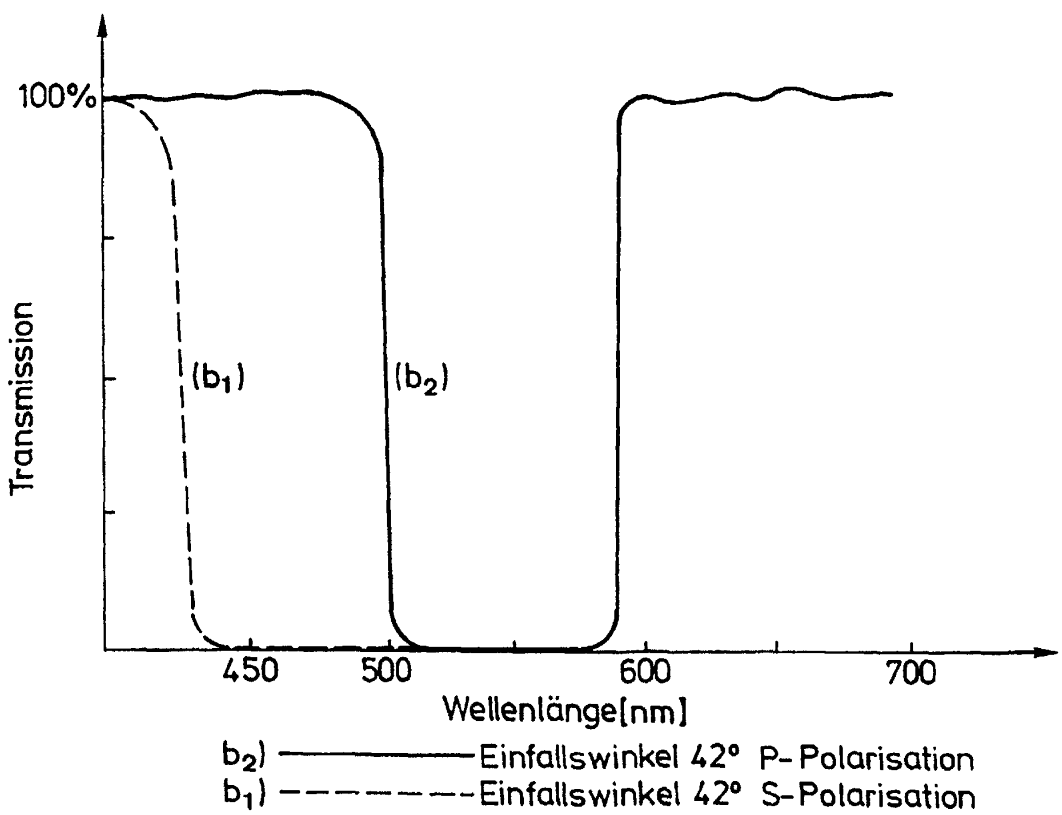
100%
Transmission
(b1)
(b2)
450
500
600
700
Wellenlänge [nm]
b2) Einfallswinkel 42° P-Polarisation
b1) Einfallswinkel 42° S-Polarisation

FIG.3b

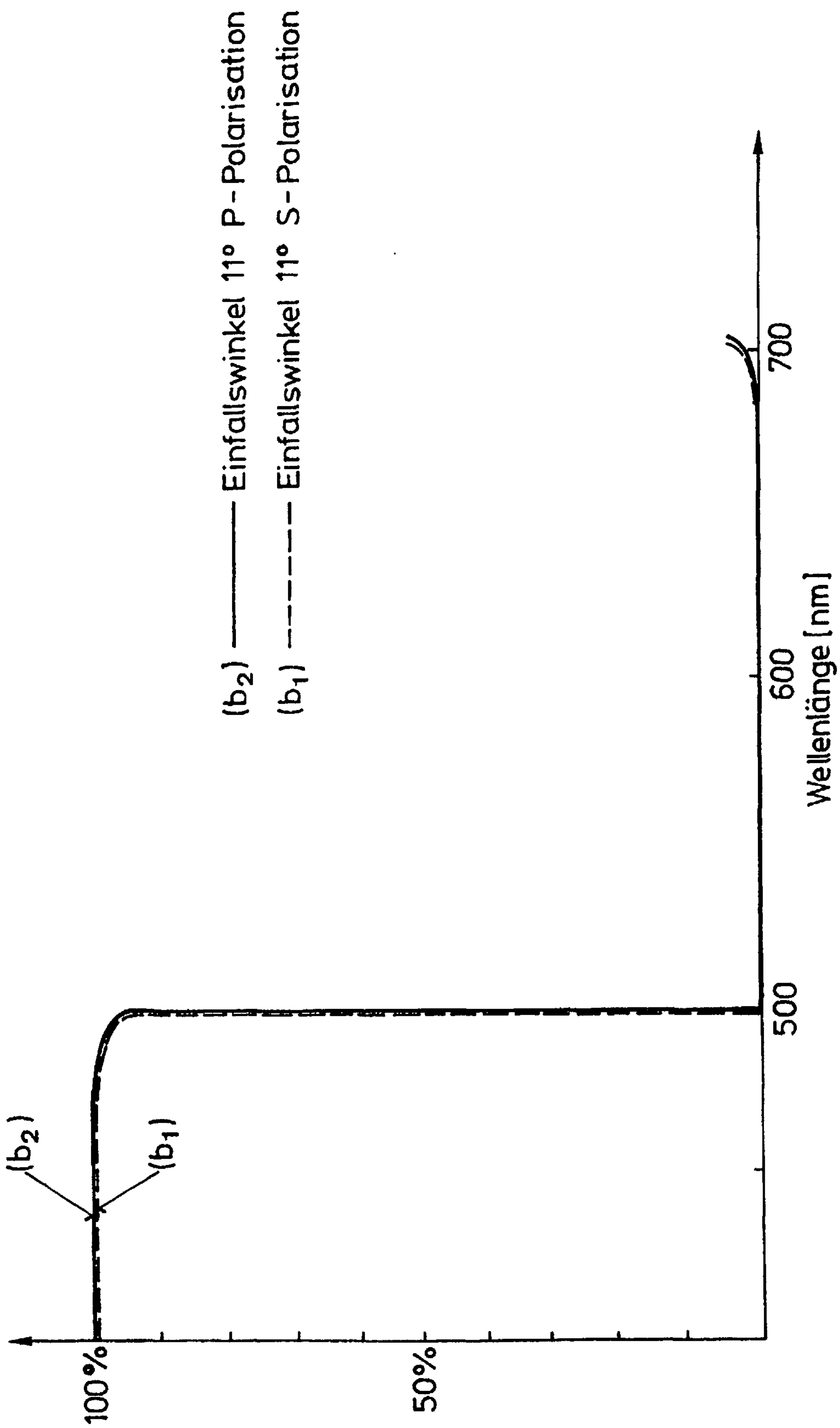
(b2) ——— Einfallswinkel 11° P-Polarisation
(b1) - - - - - Einfallswinkel 11° S-Polarisation
100%
50%
(b2)
(b1)
500
600
700
Wellenlänge [nm]

FIG.4

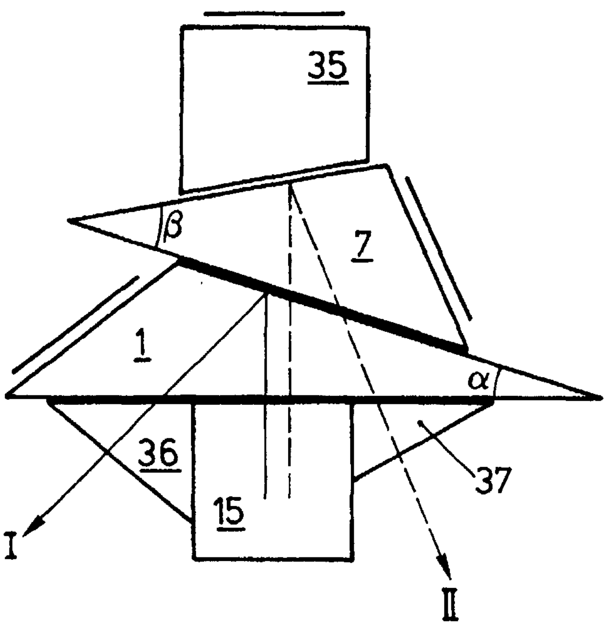


FIG. 5

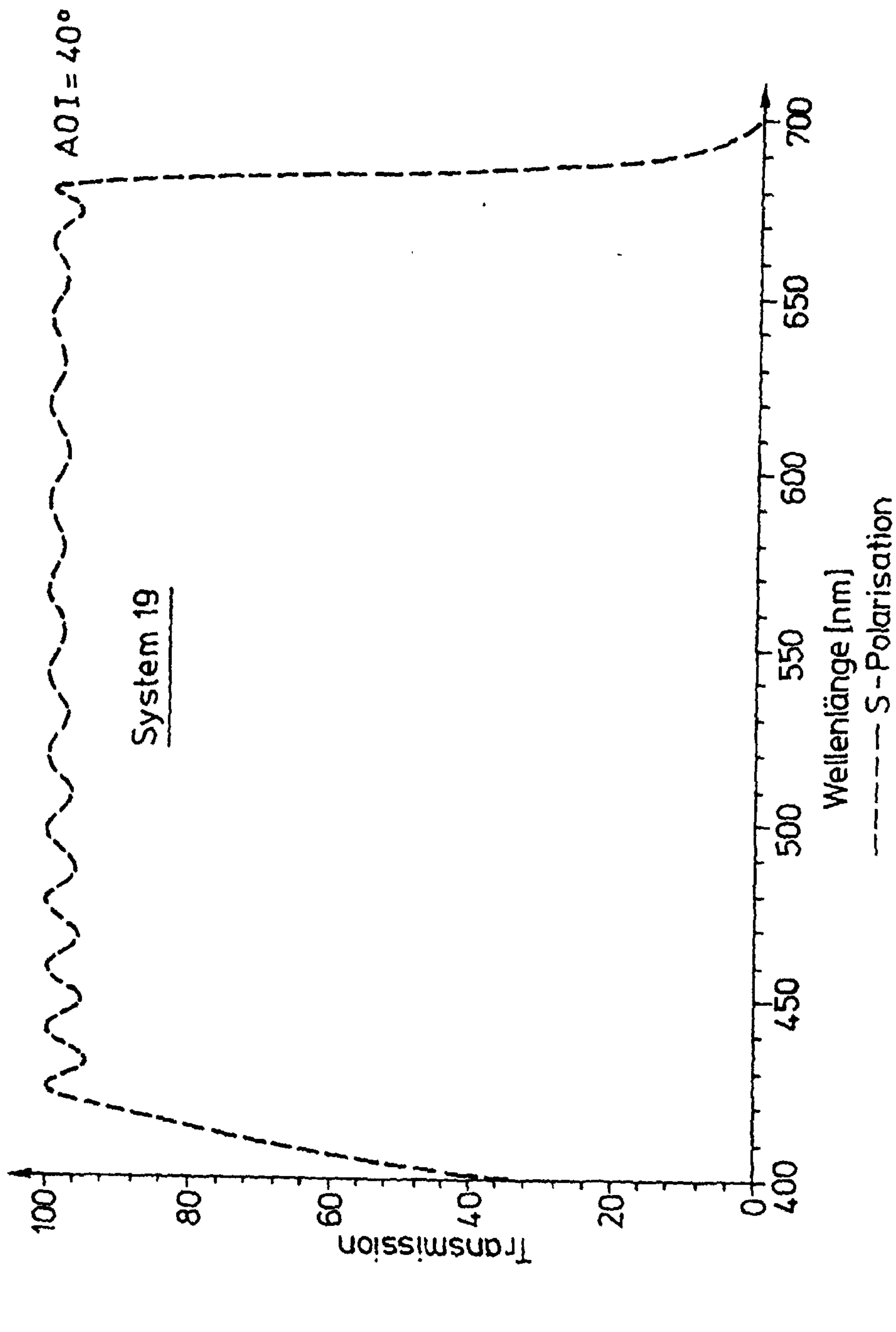
AOI = 40°
System 19
Transmission
100
80
60
40
20
0
400
450
500
550
600
650
700
Wellenlänge [nm]
- - - - S-Polarisation

FIG.6

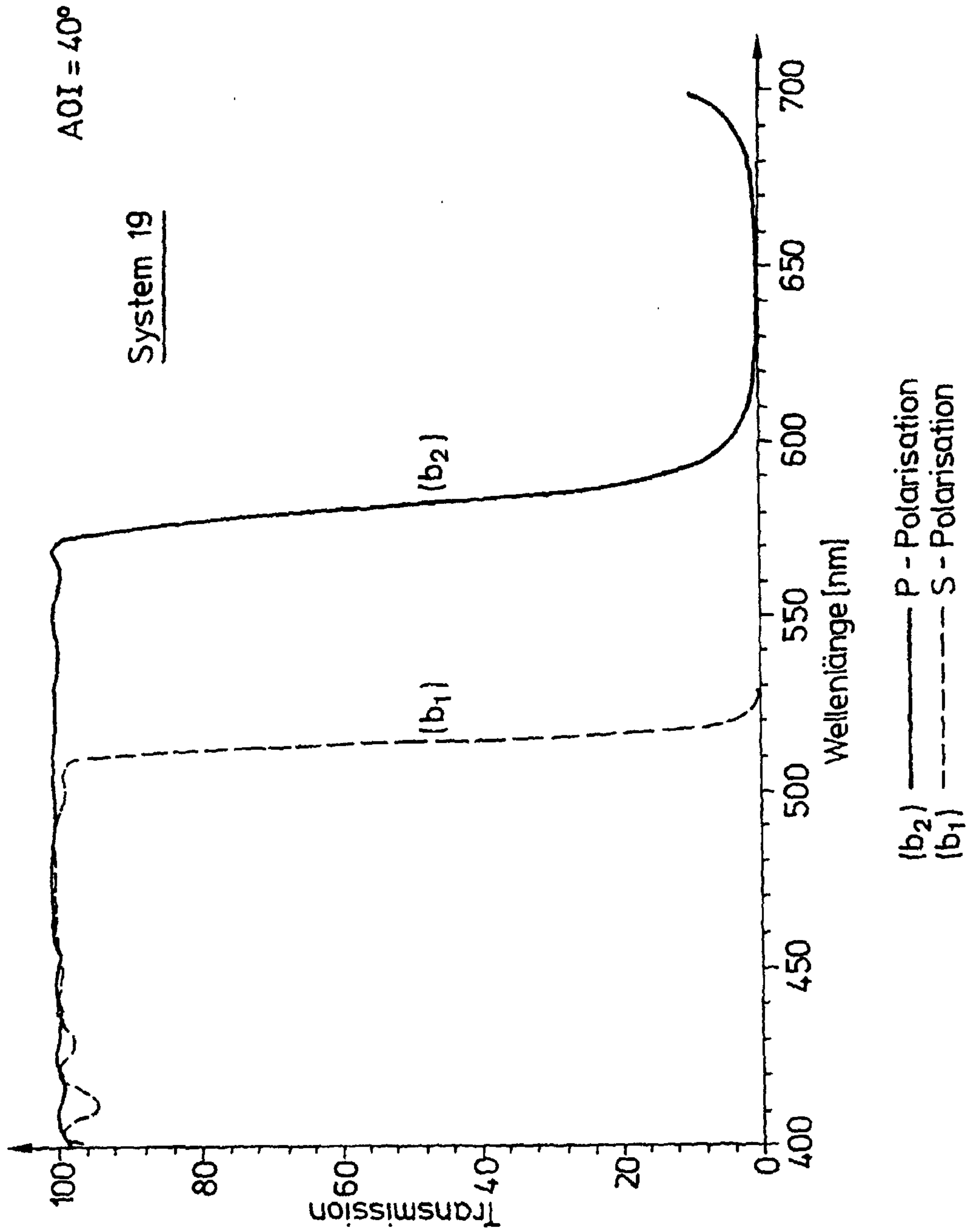
System 19
AOI = 40°
Transmission
100
80
60
40
20
0
400
450
500
550
600
650
700
Wellenlänge [nm]
(b2)
(b1)
(b2) ——— P - Polarisation
(b1) - - - - S - Polarisation

FIG.7

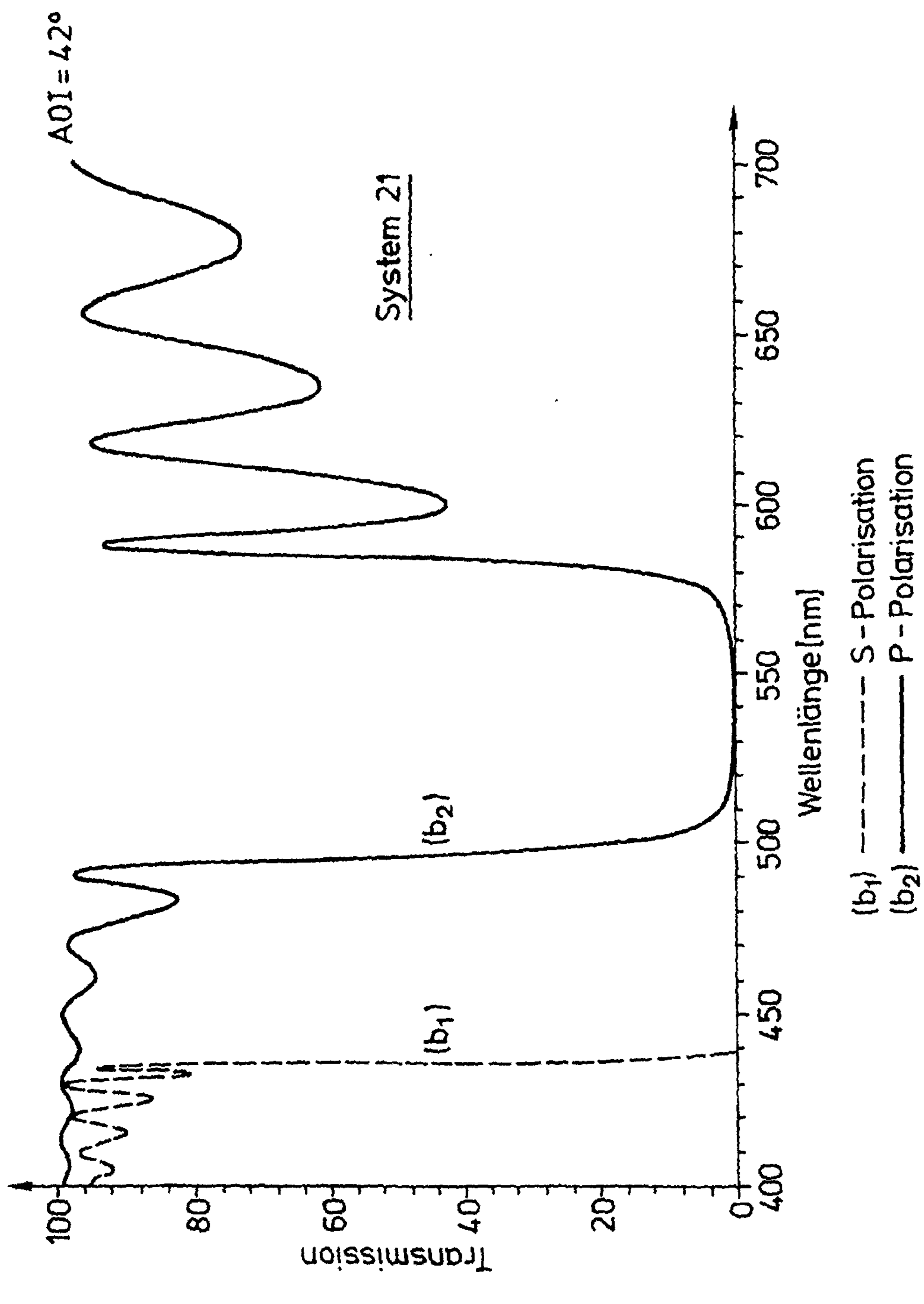
AOI = 42°
System 21
(b1)
(b2)
Transmission
100
80
60
40
20
0
400
450
500
550
600
650
700
Wellenlänge [nm]
(b1) S - Polarisation
(b2) P - Polarisation

FIG.8

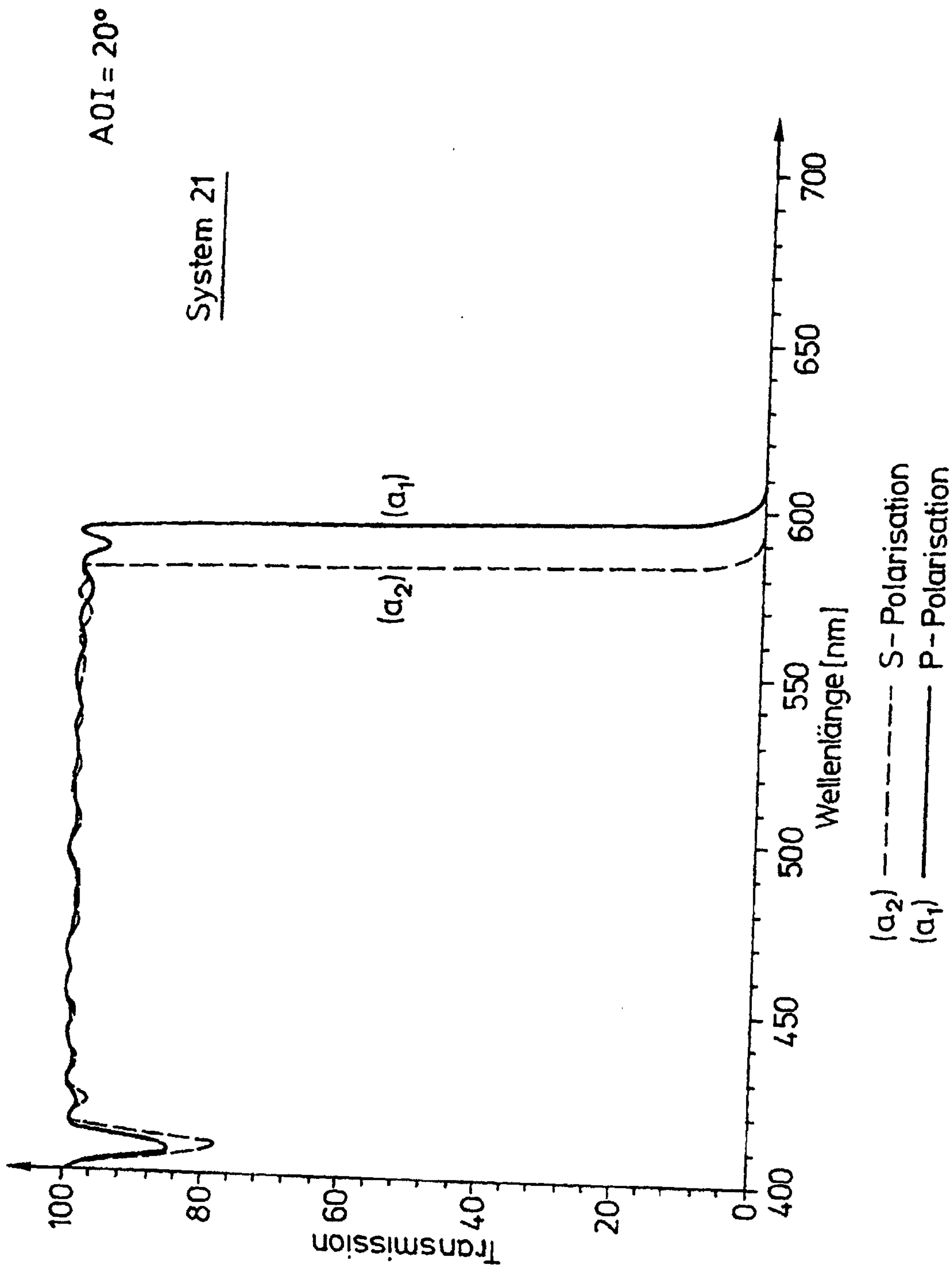
AOI = 20°
System 21
Transmission
100
80
60
40
20
0
400
450
500
550
600
650
700
Wellenlänge [nm]
(a1)
(a2)
(a2) ------ S-Polarisation
(a1) ——— P-Polarisation

FIG.9

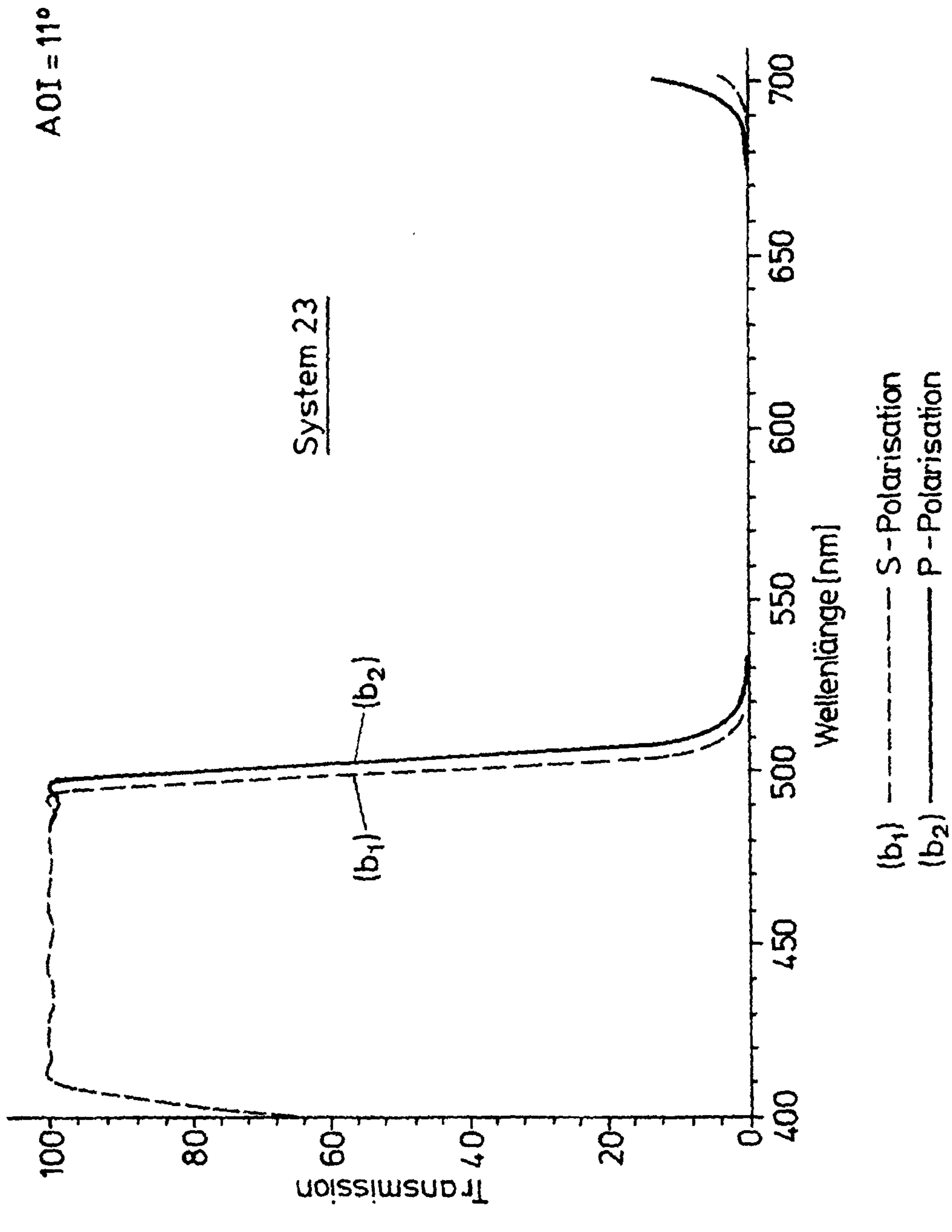
AOI = 11°
System 23
Transmission
100
80
60
40
20
0
400
450
500
550
600
650
700
Wellenlänge [nm]
(b1)
(b2)
(b1) ---------- S - Polarisation
(b2) ———————— P - Polarisation

FIG.10